# EUROPEAN PATENT APPLICATION

(11) **EP 4 851 637 A1**
(43) Date of publication of application: **09.12.2026**
(21) Application number: 25748468.3
(22) Date of filing: 14.01.2025
(51) Int. Cl.: G01N 35/02, G01N 35/00, G01N 35/10

(54) **INSPECTION DEVICE**

(30) Priority: 31.01.2024 JP 2024013009; 04.03.2024 JP 2024032137
(71) Applicant: FUJIFILM Corporation, Tokyo 106-8620 (JP)
(72) Inventor: FUKUNO, Ryo, Ashigarakami-gun, Kanagawa 258-8538 (JP)
(74) Representative: Dehns Germany Partnerschaft mbB
(86) International application number: PCT/JP2025/000880
(87) International publication number: WO 2025/164287

(57) **Abstract**

An examination apparatus that examines a specimen includes a nozzle to which a tip that comes into contact with a liquid containing the specimen and a reagent is replaceably mounted at a distal end, and that performs a stirring operation of the liquid by repeating suction and discharge of the liquid in a container accommodating the liquid, and a processor that is configured to control a suction speed of the liquid via control of a suction pressure of the nozzle, and, in a case of performing the stirring operation of the liquid, start a suction mode in a single suction period from start of the suction to next discharge in a first mode including a timing at which the suction speed reaches a maximum value in the suction period, and transition to a second mode in which the suction speed is lower than the maximum value after the first mode.

## Description

### BACKGROUND OF THE INVENTION

### 1. Field of the Invention

The technology of the present disclosure relates to an examination apparatus.

### 2. Description of the Related Art

An examination apparatus that examines a specimen is known. Among such examination apparatuses, there is an examination apparatus that optically detects a target substance by using an antigen-antibody reaction between a target substance to be examined in a specimen and a reagent, such as a chemiluminescence enzyme immunoassay device or a fluorescence immunoassay device. The chemiluminescence enzyme immunoassay is a method of reacting an antigen with a solid-phase antibody, then subjecting an enzyme-labeled antibody to a secondary reaction with the antigen, and adding a chemiluminescent substrate to measure a luminescence intensity. The fluorescence immunoassay is a method of performing an antigen-antibody reaction using an antigen or an antibody labeled with an enzyme as a labeling substance, and adding a fluorescent substrate to measure a fluorescence intensity.

In these examination apparatuses, in order to suppress a variation in a detection light amount, a liquid in which a specimen and a reagent are mixed is stirred (for example, see JP2021-089253A). For example, even in a case where the amount of a substance on which a luminescent substrate acts in a liquid is the same, in a case where a state in which the substance is aggregated and solidified and a state in which the substance is dispersed are compared, a surface area of the substance on which the luminescent substrate acts is different, and thus a variation in a detection light amount occurs. Therefore, in order to suppress such a variation in the detection light amount, the liquid is stirred to disperse a substance contained in the specimen or the reagent in the liquid.

As described in JP2021-089253A, the stirring is performed using, for example, a nozzle that suctions and discharges a liquid. Specifically, the stirring is performed by performing a stirring operation of repeatedly suctioning and discharging a liquid by a nozzle in a reaction container in which a specimen and a reagent are mixed.

### SUMMARY OF THE INVENTION

In a case where the stirring operation described in JP2021-089253A is performed using a common nozzle between different liquids, for example, where the specimen or the reagent is different, there is a concern about contamination between the different liquids. In order to suppress such contamination, a tip that comes into contact with a liquid is mounted on a distal end of a nozzle, and the tip is replaced for each liquid. The tip has a tubular shape similar to the nozzle, and the stirring operation is performed in a state in which the tip is allowed to enter the liquid. In such a stirring operation, in a case where the amount of the liquid suctioned into the tip is too large, a liquid surface of the liquid in the tip reaches the distal end of the nozzle, and thus a suction amount of the liquid suctioned into the tip is controlled such that the liquid does not adhere to the nozzle.

However, even in a case where the tip is replaced and the suction amount is controlled, contamination due to the adhesion of the liquid to the nozzle may occur. One of the causes is a positional deviation of the tip that enters the reaction container in which the liquid is accommodated. For example, the tip descends in a vertical direction and enters the reaction container, but in a case where a position of the distal end of the tip in a horizontal direction deviates from a center of the reaction container, a pressure difference in the horizontal direction occurs in the liquid flowing into the tip. In a case where such a pressure difference occurs, a flow of the liquid flowing into the tip increases, and the liquid may splash in the tip due to the increase in the flow. In a case where the splashing of the liquid in the tip is large, the liquid adheres to the nozzle, and the contamination due to the adhesion occurs.

Therefore, a measure for suppressing the contamination has been studied even in a case where the positional deviation of the distal end of the tip occurs in this way. As one of the measures, it is considered to reduce a suction speed by reducing a suction pressure over the entire period of a suction period. According to this, the flow of the liquid in the tip is suppressed, and thus the splashing of the liquid can be suppressed. However, in a case where the suction speed is reduced over the entire period of the suction period, there is a problem in that a stirring effect is also reduced.

The technology of the present disclosure has been made in view of the above circumstances, and provides an examination apparatus capable of suppressing contamination caused by adhesion of a liquid suctioned into a tip to a nozzle while suppressing a decrease in a stirring effect.

In order to achieve the above object, an examination apparatus according to the present disclosure is an examination apparatus that examines a specimen, the examination apparatus including: a nozzle to which a tip that comes into contact with a liquid containing the specimen and a reagent is replaceably mounted at a distal end, and that is configured to perform a stirring operation of the liquid by repeating suction and discharge of the liquid in a container accommodating the liquid; and a processor that is configured to control a suction speed of the liquid via control of a suction pressure of the nozzle, and, in a case of performing the stirring operation of the liquid, start a suction mode in a single suction period from start of the suction to next discharge in a first mode including a timing at which the suction speed reaches a maximum value in the suction period, and transition to a second mode in which the suction speed is lower than the maximum value after the first mode.

It is preferable that the examination apparatus is configured to perform examinations of a plurality of items using different reagents, and the processor is configured to change a content of the suction mode according to an item.

It is preferable that, in a case of changing the content of the suction mode according to the item, the change in the content of the suction mode includes a change in a time ratio for executing each of the first mode and the second mode.

It is preferable that, in a case of changing the content of the suction mode according to the item, the change in the content of the suction mode includes selection of a combination mode in which the first mode and the second mode are switched in the suction period, or a single mode in which a single mode is executed in the suction period.

It is preferable that the processor is configured to change the content of the suction mode according to an individual difference of the specimen, in addition to the item.

It is preferable that, in a case of changing the content of the suction mode according to the individual difference of the specimen, the change in the content of the suction mode includes a change in a time ratio for executing each of the first mode and the second mode.

It is preferable that, in a case of changing the content of the suction mode according to the individual difference of the specimen, the change in the content of the suction mode includes selection of a combination mode in which the first mode and the second mode are switched in the suction period, or a single mode in which a single mode is executed in the suction period.

It is preferable that each of the first mode and the second mode has a rising section in which the suction pressure rises and a falling section in which the suction pressure falls after reaching a peak.

It is preferable that, in a case of transition from the first mode to the second mode, there is no rising section in which the suction pressure rises at an initial stage of the second mode, and the suction pressure monotonically decreases in the second mode.

It is preferable that the transition to the second mode is made by starting a decrease in the suction pressure from a peak of the first mode, and the suction pressure decreases in a stepwise manner in the second mode.

It is preferable that the transition to the second mode is made by starting a decrease in the suction pressure from a peak of the first mode, the suction pressure continuously decreases in the second mode, and an absolute value of a slope of a falling section in which the suction pressure decreases in the second mode is smaller than an absolute value of a slope of a rising section in which the suction pressure rises at an initial stage of the first mode.

It is preferable that an examination method of the specimen is an examination method of optically detecting a target substance in the specimen by using an antigen-antibody reaction between the target substance and the reagent, and the stirring operation is an operation of dispersing the reagent and the specimen in the liquid.

It is preferable that the reagent contains an antigen or an antibody bound to a magnetic particle.

According to the technology of the present disclosure, it is possible to suppress contamination caused by the liquid suctioned into the tip adhering to the nozzle while suppressing a decrease in the stirring effect.

### BRIEF DESCRIPTION OF THE DRAWINGS

FIG. 1 is a diagram showing an overall configuration of an examination apparatus.
FIG. 2 is a diagram showing a configuration of a cartridge.
FIG. 3 is a diagram showing an examination procedure.
FIG. 4 is a diagram showing a stirring processing procedure.
FIGS. 5A and 5B are diagrams showing a state of splashing of a liquid in a tip.
FIG. 6 is a diagram showing control of a suction pressure.
FIG. 7 is a diagram showing a relationship between a suction speed and a stirring effect.
FIG. 8 is a diagram showing control of a suction pressure of Comparative Example 1.
FIG. 9 is a diagram showing control of a suction pressure of Comparative Example 2.
FIG. 10 is a diagram showing a method of determining a stirring operation condition of a second embodiment.
FIG. 11 is a diagram showing the stirring operation condition of the second embodiment.
FIG. 12A is a diagram showing a concept of a method of determining a time ratio of a high-speed suction mode according to a characteristic (viscosity) of a liquid. FIG. 12B is a diagram showing a concept of a method of determining a time ratio of a high-speed suction mode according to a characteristic (surface tension) of a liquid.
FIG. 13 is a diagram showing a concept of a method of determining a time ratio of a high-speed suction mode according to a liquid amount.
FIG. 14 is a diagram showing a method of determining a stirring operation condition of a modification example of the second embodiment.
FIG. 15 is a diagram showing a method of acquiring a characteristic of each individual of a specimen.
FIG. 16 is a diagram showing the stirring operation condition of the modification example of the second embodiment.
FIG. 17 is a diagram showing a modification example of control of a suction pressure.
FIG. 18 is a diagram showing another modification example of the control of the suction pressure.

### DESCRIPTION OF THE PREFERRED EMBODIMENTS

Hereinafter, an examination apparatus according to an embodiment of the present disclosure will be described with reference to the drawings. Constituent elements indicated by the same reference numerals in the drawings mean the same constituent elements. Unless otherwise specified in the specification, each constituent element is not limited to one, and each constituent element may be plural.

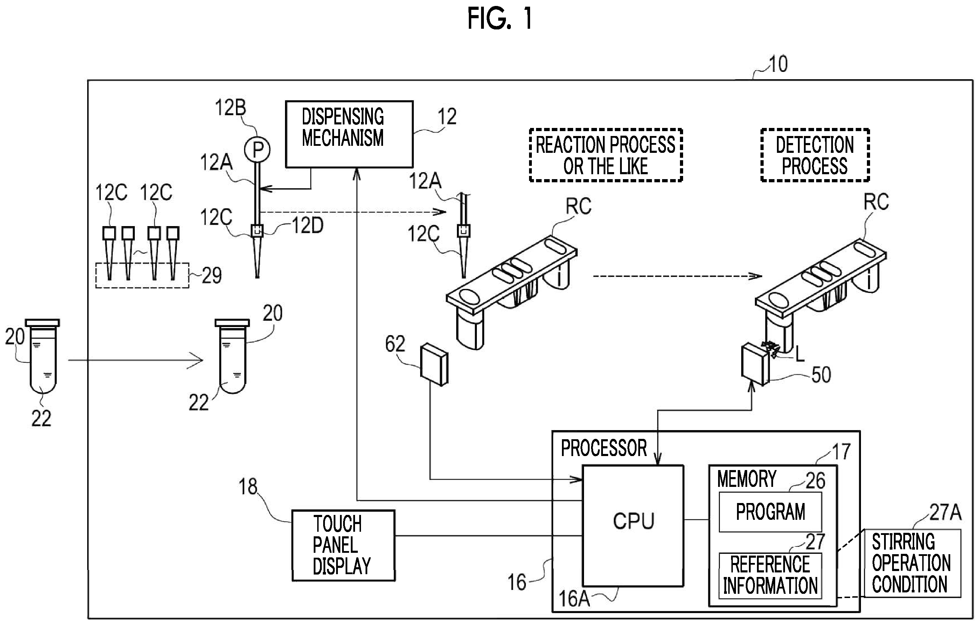

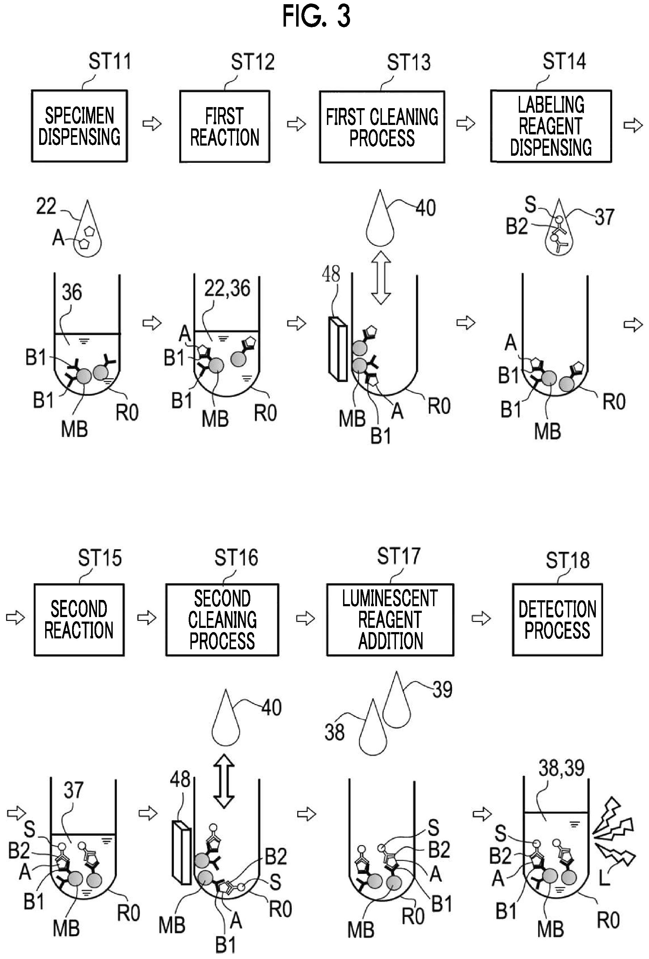

FIG. 1 is a schematic diagram showing an overall configuration of the examination apparatus 10 according to the embodiment of the present disclosure. The examination apparatus 10 is an examination apparatus that examines a specimen 22 collected from a living body, and is, for example, an immunoassay apparatus using a chemiluminescence enzyme immunoassay method as a basic principle. As is well known, the chemiluminescence enzyme immunoassay method is one of examination methods that optically detect an examination target substance A (see FIG. 3) in the specimen 22 by using an antigen-antibody reaction between the examination target substance A and a reagent. The examination target substance A is a target substance to be examined, and is an example of a "target substance" according to the technology of the present disclosure.

As an example, a cartridge RC in which the reagent is accommodated is used in the examination apparatus 10. The cartridge RC is an example of a cartridge used to perform an examination based on the chemiluminescence enzyme immunoassay method. The reagent contains an antigen or an antibody that reacts with the examination target substance A. Since the reagent is different for each type of the examination target substance A, the cartridge RC is prepared for each measurement item according to the type of the examination target substance A. In the examination apparatus 10, the cartridge RC is selected according to the measurement item. The cartridge RC is integrally provided with a reaction container in which the specimen 22 reacts with the reagent, as will be described later.

The examination apparatus 10 comprises a dispensing mechanism 12, a photodetector 50, a processor 16, a memory 17, a touch panel display 18, and a camera 62. The specimen 22 is loaded into the examination apparatus 10 in a state of being accommodated in a specimen collection container 20.

The dispensing mechanism 12 comprises a nozzle 12A that suctions or discharges a liquid such as the specimen 22 or the reagent, and a pump 12B that applies a suction pressure and a discharge pressure to the nozzle 12A. As an example, the pump 12B is a syringe pump that generates the suction pressure and the discharge pressure by reciprocating a plunger inserted into a cylinder connected to the nozzle 12A in the cylinder. In addition, the pump 12B is driven by, for example, a pulse motor.

The dispensing mechanism 12 comprises a moving mechanism that moves the nozzle 12A in a horizontal direction and a vertical direction. The dispensing mechanism 12 moves the nozzle 12A to a target position by the moving mechanism, and causes the nozzle 12A to suction or discharge through the pump 12B at the target position.

A tip 12C that comes into contact with the liquid containing the specimen 22 or the reagent is replaceably mounted on a distal end 12D of the nozzle 12A. The tip 12C has a tubular shape similar to the nozzle 12A, and has a tapered shape in which the distal end is narrowed. The tip 12C is a single-use tip, and is replaced, for example, for each different specimen 22 or for each measurement item with a different reagent. As will be described later, the liquid suctioned by the nozzle 12A is controlled to be retained in the tip 12C and not to reach the distal end 12D of the nozzle 12A. As a result, contamination between different specimens 22 or between different reagents is suppressed. In addition, a stocker 29 that accommodates a plurality of tips 12C is loaded in the examination apparatus 10. The nozzle 12A is provided with a mechanism for attaching and detaching the tip 12C (not shown). The dispensing mechanism 12 moves the nozzle 12A to a location of the stocker 29, and mounts the unused tip 12C on the distal end 12D of the nozzle 12A. The used tip 12C is removed from the nozzle 12A and is discarded, for example, in a disposal unit (not shown).

The dispensing mechanism 12 acquires the specimen 22 from the specimen collection container 20 and dispenses the acquired specimen 22 into the cartridge RC. In addition, the dispensing mechanism 12 mixes the specimen 22 with a part of the reagent accommodated in the cartridge RC. Further, the dispensing mechanism 12 also functions as a stirring mechanism that stirs the liquid in which the specimen 22 and the reagent are mixed.

The camera 62 is, for example, an image acquisition unit for monitoring the mounting state of the tip 12C on the nozzle 12A. The camera 62 is, for example, an optical camera including an image sensor and an optical system that forms an image on an imaging plane. The image sensor is a complementary metal oxide semiconductor (CMOS) image sensor, a charge coupled device (CCD) image sensor, or the like.

In the cartridge RC, each process such as a reaction process between the specimen 22 and the reagent is performed according to an examination procedure, and finally, the optical detection process of the examination target substance A is performed by the photodetector 50. The photodetector 50 receives the chemiluminescence L (see also FIG. 3) emitted according to the reaction state between the specimen 22 and the reagent, and measures a concentration of the examination target substance A in the specimen 22 according to the amount of received light. The photodetector 50 is composed of a photomultiplier tube, a photodiode, or the like.

The processor 16 integrally controls each unit of the examination apparatus 10. The processor 16 is composed of, for example, a central processing unit (CPU) 16A and the memory 17. The memory 17 stores a program 26 executed by the CPU 16A and reference information 27. The program 26 is an operation program for causing the general-purpose CPU 16A to function as the processor 16 that controls the examination apparatus 10. The reference information 27 includes setting information that is set in advance to perform various types of control.

The processor 16 controls the operation of the dispensing mechanism 12 including the pump 12B and the moving mechanism of the nozzle 12A. The reference information 27 includes a stirring operation condition 27A, which is an operation condition in a case where the dispensing mechanism 12 performs a stirring operation of the liquid, as the setting information. The processor 16 controls the operation of the pump 12B in accordance with the stirring operation condition 27A. The content of the stirring operation condition 27A will be described later.

In addition, the processor 16 acquires information on a light amount of the chemiluminescence L detected by the photodetector 50, and calculates a concentration of the examination target substance A based on the information on the light amount. The reference information 27 stores information indicating a correspondence relationship between the light amount of the chemiluminescence L detected by the photodetector 50 and the amount of the examination target substance A. The correspondence relationship is stored, for example, as a calibration curve represented by a function. The correspondence relationship may be in a format of a table. The processor 16 calculates the amount of the examination target substance A from, for example, the light amount of the chemiluminescence L acquired from the photodetector 50, and the calibration curve stored in the memory 17. Since the amount of the specimen 22 is known, the concentration of the examination target substance A is calculated from the calculated amount of the examination target substance A. The processor 16 outputs the concentration of the examination target substance A as an examination result.

The touch panel display 18 displays an operation screen and receives an operation instruction such as an instruction to start the examination through the operation of the operation screen by the user. In addition, the touch panel display 18 displays information such as an examination result.

The specimen 22 is, for example, a body fluid such as blood collected from the living body. In a case where the specimen 22 is blood, the specimen 22 may be whole blood, blood plasma, serum, or the like. Further, a centrifuge may be provided in the examination apparatus 10 to extract blood plasma or serum from whole blood. Furthermore, the examination target substance A which can be contained in the specimen 22 is an antigen, an antibody, a protein, a low-molecular-weight compound, or the like. It should be noted that the specimen 22 is not limited to blood, and may be a substance collected from a living body, such as urine or body fluid.

In addition, the specimen collection container 20 accommodating the collected specimen 22 is loaded into the examination apparatus 10. A plurality of the specimen collection containers 20 may be collectively loaded into the examination apparatus 10 such that the examination apparatus 10 can continuously process examinations for the plurality of different specimens 22.

The cartridge RC is a single-use type that is discarded after use for one specimen 22. The cartridge RC accommodates, for example, all the reagents necessary for the examination of the specimen 22.

The examination apparatus 10 can load, for example, a plurality of the cartridges RC of the same type or different types. In addition, a plurality of the specimen collection containers 20 can be loaded. As a result, it is possible to continuously perform examinations of a plurality of different specimens 22, and it is also possible to continuously perform examinations of a plurality of types of measurement items for the same specimen 22.

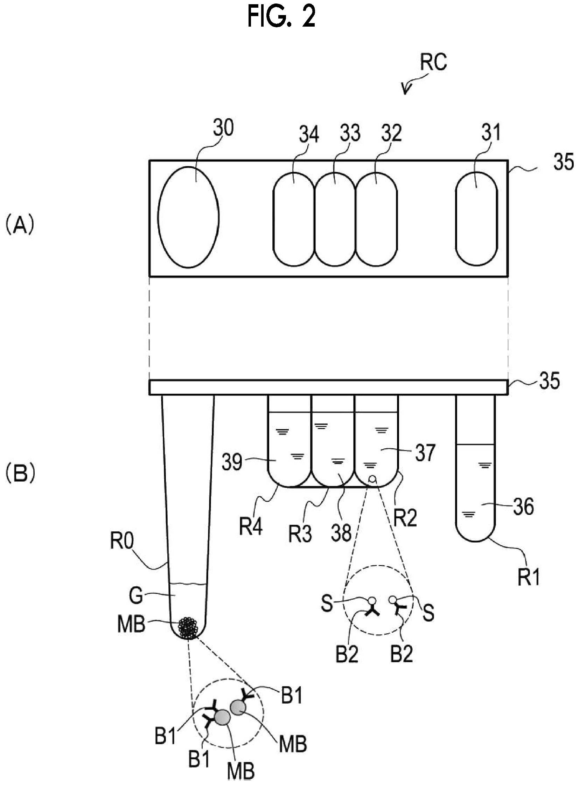

FIG. 2 is a schematic diagram showing an example of the cartridge RC, in which (A) of FIG. 2 is a top view of the cartridge RC, and (B) of FIG. 2 is a front view of the cartridge RC. The cartridge RC includes a plate-shaped connecting portion 35 having five openings 30 to 34, and five tubular cells R0 to R4 each having one end at each of the openings 30 to 34 and extending downward. The cartridge RC has a configuration in which the plurality of cells R0 to R4 are integrated by the connecting portion 35. Among the plurality of cells R0 to R4, the cell R0 and the cell R1 disposed at both ends are longer than the other cells R2 to R4. The cell R0 is the longest. Before use, the openings 30 to 34 of the cartridge RC are covered with a sealing film (not shown).

The cell R0 functions as a reaction container for the specimen 22 and the reagent. The cell R0 will be referred to as a reaction cell R0 below. The reaction cell R0 accommodates a plurality of magnetic particles MB modified with a first binding substance B1 which is an antigen or an antibody that specifically binds to the examination target substance A, as one of the reagents. As an example, the magnetic particles MB are accommodated in a solid-phase state by being sealed in a gel-like gelatin G. The specimen 22 is dispensed into the reaction cell R0, and mixed with various reagents in the reaction cell R0. For example, in a case where the magnetic particles MB have a spherical shape, a diameter thereof is 0.1 to 10 µm, preferably 0.1 to 5 µm, and more preferably approximately 1 to 3 µm.

The cell R1 accommodates a buffer solution 36. The cell R2 accommodates a labeling reagent 37 containing a label S modified with a second binding substance B2 for specifically binding to the examination target substance A. A first luminescent reagent 38 is accommodated in the cell R3, and a second luminescent reagent 39 is accommodated in the cell R4. In the present example, the label S is an enzyme, and the label S emits light in the presence of the first luminescent reagent 38 and the second luminescent reagent 39. The buffer solution 36 in the cell R1, the labeling reagent 37 in the cell R2, the first luminescent reagent 38 in the cell R3, and the second luminescent reagent 39 in the cell R4 are simply referred to as reagents 36 to 39, in a case where it is not necessary to distinguish the respective liquids.

The first binding substance B1 and the second binding substance B2 that specifically bind to the examination target substance A are, for example, an antibody against the antigen in a case where the examination target substance A is an antigen, and an antigen against the antibody in a case where the examination target substance A is an antibody. In addition, in a case where the examination target substance A is a protein, a low-molecular-weight compound, or the like, the first binding substance B1 and the second binding substance B2 are aptamers or the like against the protein, the low-molecular-weight compound, or the like. The first binding substance B1 and the second binding substance B2 may be the same as or may be different from each other.

Here, the examination procedure according to the present example based on the chemiluminescence enzyme immunoassay method will be described with reference to FIG. 3. FIG. 3 schematically shows a reaction in a case where the specimen 22 contains the examination target substance A.

The reaction cell R0 accommodates the magnetic particles MB modified with the first binding substance B1 in advance, and the buffer solution 36 is dispensed into the reaction cell R0 before the dispensing of the specimen 22. In this state, the specimen 22 is dispensed into the reaction cell R0 (Step ST11).

As described above, the magnetic particles MB are sealed with the gelatin G in the reaction cell R0. The gelatin G is melted by heating with a heater (not shown), and the liquefied gelatin G is suctioned and removed by the dispensing mechanism 12. In a state before the specimen 22 and the buffer solution 36 are dispensed, only the magnetic particles MB remain in the reaction cell R0 by suctioning the gelatin G. In this case, more specifically, in order to improve a dispersion effect of the magnetic particles MB by stirring, which will be described later, a treatment of collecting the magnetic particles MB, including the magnetic particles MB and the like adhering to the side wall of the reaction cell R0, at the bottom portion of the reaction cell R0 is performed. In this state, the buffer solution 36 and the specimen 22 are dispensed into the reaction cell R0.

In the reaction cell R0, the magnetic particles MB, the specimen 22, and the buffer solution 36 are mixed with each other, and as a first reaction, a binding reaction in which the examination target substance A in the specimen 22 and the first binding substance B1 are specifically bound to each other occurs (Step ST12). In the first reaction, the examination target substance A in the specimen 22 binds to the first binding substance B1, so that the examination target substance A is captured by the magnetic particles MB through the first binding substance B1.

Next, a first cleaning process (Bound/Free (B/F) separation) for removing unreacted components other than the examination target substance A captured by the magnetic particles MB is performed (Step ST13). The magnet 48 is disposed close to the outside of the reaction cell R0, the reaction liquid after the first reaction is discharged in a state where the magnetic particles MB are collected on the inner wall surface of the reaction cell R0, and then a cleaning liquid 40 is dispensed into the reaction cell R0. In Step ST13 in FIG. 3, a bidirectional arrow in the up-down direction shown at the upper portion of the reaction cell R0 schematically indicates a state in which the cleaning liquid 40 is dispensed into the reaction cell R0 and the cleaning liquid 40 is discharged from the reaction cell R0. In the first cleaning process, the dispensing and the discharging of the cleaning liquid 40 are repeated a plurality of times. The cleaning liquid 40 is also discharged from the reaction cell R0 in a state where the magnet 48 is disposed close to the outside of the reaction cell R0 and the magnetic particles MB are collected on the inner wall surface of the reaction cell R0.

After the first cleaning process, the labeling reagent 37 is dispensed into the reaction cell R0 (Step ST14). The labeling reagent 37 contains the second binding substance B2 to which the label S is attached, which is a binding substance for specifically binding to the examination target substance A.

In the reaction cell R0, as the second reaction, a binding reaction, in which the examination target substance A captured by the magnetic particles MB and the second binding substance B2 specifically bind to each other, occurs (Step ST15). Thereby, the label S is attached to the examination target substance A through the second binding substance B2.

Next, a second cleaning process (B/F separation), which is for removing the unreacted components in the labeling reagent 37 other than the second binding substance B2 bound to the examination target substance A captured by the magnetic particles MB, is performed (Step ST16). The second cleaning process (Step ST16) is performed in the same manner as the first cleaning process (Step ST13).

Thereafter, the first luminescent reagent 38 and the second luminescent reagent 39 are added to the reaction cell R0 (Step ST17). The label S is an enzyme, and causes a chemiluminescence L in the presence of the first luminescent reagent 38 and the second luminescent reagent 39, containing a luminescent substrate. Then, in Step ST18, the examination target substance A is detected by detecting the chemiluminescence L. The examination procedure is as described above.

Here, in the first reaction, the dispensing mechanism 12 stirs the liquid by repeating the suction and discharge of the liquid containing the specimen 22 in the reaction cell R0. By this stirring, the magnetic particles MB are dispersed in the liquid. In a case where a state in which the magnetic particles MB are aggregated and solidified and a state in which the magnetic particles MB are dispersed are compared, the surface area on which the first luminescent reagent 38 and the second luminescent reagent 39 act changes. In a case where the dispersion state of the magnetic particles MB is non-uniform, the variation in the detection light amount for each examination occurs even in a case where the concentration of the examination target substance A contained in the specimen 22 is the same. Since the dispersion state of the magnetic particles MB in the liquid can be made uniform by the stirring, the variation in the detection light amount of the chemiluminescence L is suppressed.

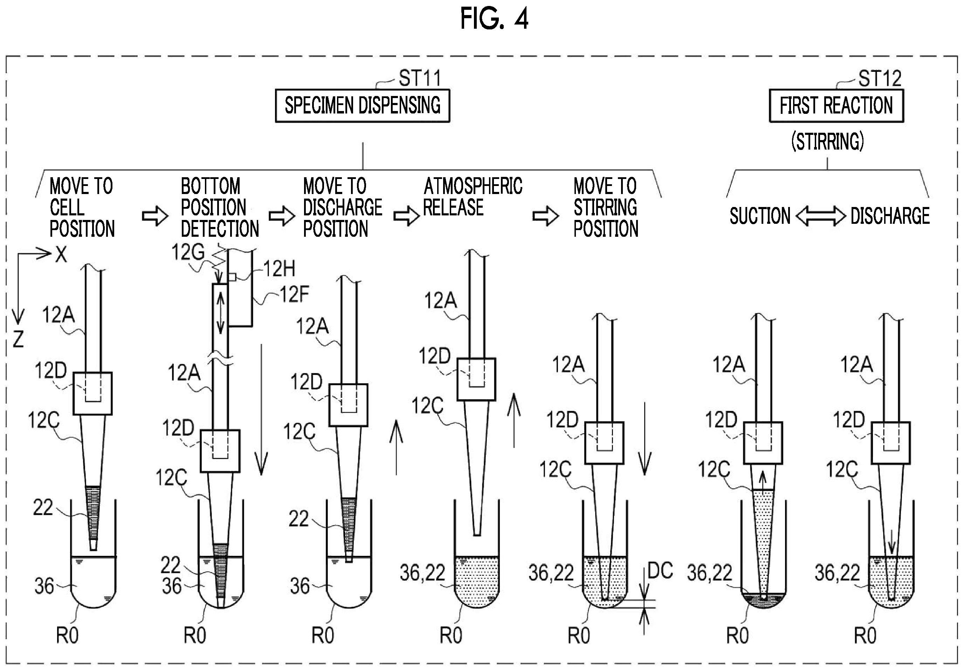

FIG. 4 shows a processing procedure from the specimen dispensing in Step ST11 to the stirring operation in the first reaction in Step ST12. This series of processing is performed by the dispensing mechanism 12 that operates under the control of the processor 16.

First, as a premise, before the dispensing of the specimen 22, as described above, the gelatin G in the reaction cell R0 is melted and removed, and the buffer solution 36 is further dispensed into the reaction cell R0. In the specimen dispensing, the dispensing mechanism 12 suctions the specimen 22 from the specimen collection container 20 after the tip 12C is mounted on the distal end 12D of the nozzle 12A.

The dispensing mechanism 12 moves the nozzle 12A in the horizontal direction (indicated by the X direction in FIG. 4) to the position (cell position in FIG. 4) of the reaction cell R0 of the cartridge RC in a state in which the specimen 22 suctioned into the tip 12C is held. Then, in the bottom position detection, first, the dispensing mechanism 12 lowers the nozzle 12A toward the bottom portion of the reaction cell R0 along the Z direction. The Z direction is an entry direction in which the tip 12C enters the reaction cell R0, and is, for example, a vertical direction orthogonal to the horizontal direction.

The processor 16 performs the bottom position detection of the reaction cell R0 while controlling the operation of the dispensing mechanism 12. The bottom position detection is performed by the following configuration using, for example, a reflective photosensor 12H. That is, the nozzle 12A is slidably attached to a support member 12F extending in the Z direction in the Z direction, and is biased to the lower end side of the sliding range by a spring 12G. As a result, in a case where the distal end of the tip 12C abuts on the bottom portion of the reaction cell R0, the nozzle 12A receives a reaction force from the bottom portion through the tip 12C and slides upward with respect to the support member 12F. The photosensor 12H is provided on the support member 12F, and faces the nozzle 12A, in the support member 12F, in a case where the nozzle 12A slides upward from the initial position on the lower end side by a predetermined distance set in advance.

Therefore, in a case where the tip 12C and the bottom portion abut on each other due to the lowering of the support member 12F and the nozzle 12A, and the nozzle 12A slides by a predetermined distance due to the reaction force, the amount of light received by the photosensor 12H changes by the light shielding by the nozzle 12A. The processor 16 monitors the amount of lowering of the support member 12F from the lowering start position at which the lowering of the support member 12F is started to the change in the amount of light received by the photosensor 12H through the amount of rotation of the drive motor. The processor 16 detects the amount of rotation of the drive motor corresponding to the amount of lowering of the support member 12F, that is, the amount of rotation of the drive motor in which the distal end of the tip 12C reaches the bottom portion of the reaction cell R0 in a case where the drive motor is rotated from the lowering start position of the support member 12F, as the bottom position of the reaction cell R0.

The method of the bottom position detection is not limited to the method using the photosensor 12H. For example, the bottom position detection may be performed by using a force sensor that outputs a reaction force due to the contact between the distal end of the tip 12C and the bottom portion of the reaction cell R0 as an electric signal. In addition, the sliding of the nozzle 12A may be detected by a microswitch instead of the photosensor 12H.

The stirring is performed, for example, in a state where a clearance DC set in advance is ensured between the bottom portion of the reaction cell R0 and the distal end of the tip 12C. The bottom position of the reaction cell R0 is detected as a reference position for ensuring the clearance DC of the tip 12C.

After the bottom position detection is completed, the dispensing mechanism 12 raises the tip 12C from the bottom portion of the reaction cell R0 and moves the tip 12C to a discharge position. The discharge position is, for example, a position where the distal end of the tip 12C slightly enters the buffer solution 36. At the discharge position, the dispensing mechanism 12 applies a discharge pressure to the nozzle 12A through the pump 12B and discharges the specimen 22 suctioned into the tip 12C into the buffer solution 36.

After the specimen 22 is discharged, the dispensing mechanism 12 raises the nozzle 12A and raises the distal end of the tip 12C in the buffer solution 36 to above the liquid surface of the buffer solution 36. Then, the dispensing mechanism 12 discharges the liquid remaining in the tip 12C. As a result, the inside of the tip 12C is opened to the atmosphere. The purpose of performing the atmospheric release is as follows. As an example, an excitation pattern of the pulse motor is switched between a case of suctioning the specimen 22 and a case of performing a stirring operation of the liquid. The switching of the excitation pattern is performed by switching the strength of the magnetic flux generated by the electromagnet by changing the current flowing through a coil of an electromagnet. In a case where the liquid remains in the tip 12C in a case where such an excitation pattern is switched, the liquid in the tip 12C may be discharged or suctioned due to the influence of the minute driving of the pulse motor. The atmospheric release is performed to suppress the unintended discharge or suction of the liquid that occurs in a case where the excitation pattern of the pulse motor is switched. The atmospheric release is performed by, for example, a solenoid valve provided separately from the pulse motor.

In a case where the atmospheric release is ended, the dispensing mechanism 12 lowers the nozzle 12A and moves the nozzle 12A to a stirring position. The stirring position is a position where a predetermined spacing is secured as a clearance DC from the bottom portion of the reaction cell R0 to the distal end of the tip 12C. For example, a spacing of about 0.5 mm is set as the clearance DC.

The dispensing mechanism 12 executes a stirring operation of repeating the suction and discharge of the liquid in the reaction cell R0 at the stirring position. The liquid is stirred by the stirring operation, and the magnetic particles MB in the liquid are dispersed.

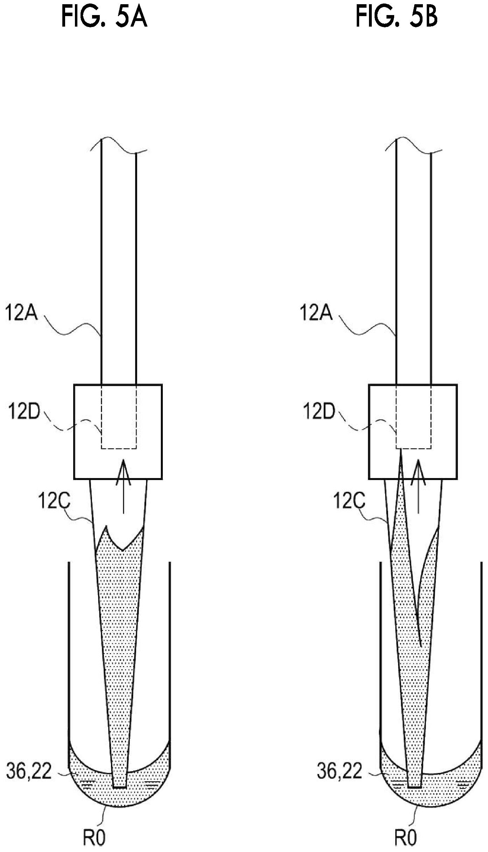

In a case where such stirring is performed, as shown in FIG. 5A, in a case where the position of the distal end of the tip 12C in the horizontal direction is at the center of the reaction cell R0, a pressure difference in the horizontal direction does not occur in the liquid flowing into the tip 12C. Therefore, in this case, the flow of the liquid (indicated by hatching in FIG. 5A) flowing into the tip 12C is relatively small. On the other hand, as shown in FIG. 5B, in a case where the position of the distal end of the tip 12C in the horizontal direction is shifted from the center of the reaction cell R0, a pressure difference in the horizontal direction occurs in the liquid flowing into the tip 12C. In a case where such a pressure difference occurs, the flow of the liquid (indicated by hatching in FIG. 5B) flowing into the tip 12C increases, and as a result, the liquid may splash toward the nozzle 12A in the tip 12C. In a case where the splashing of the liquid in the tip 12C is large, the liquid adheres to the distal end 12D of the nozzle 12A. Unlike the tip 12C, the nozzle 12A is shared between different liquids (for example, the specimen 22 and the like), and thus contamination caused by the sharing occurs. In FIGS. 5A and 5B, the degree of the flow of the liquid in the tip 12C is schematically shown by the magnitude of the change in the liquid level.

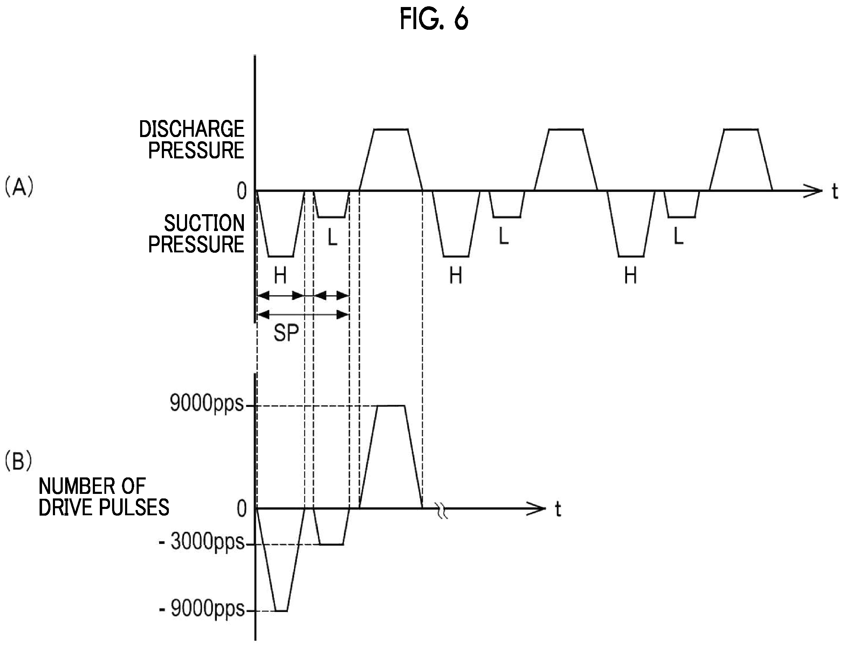

Therefore, as shown in FIG. 6, the processor 16 controls the suction speed of the liquid via the control of the suction pressure of the nozzle 12A, thereby suppressing the splashing of the liquid in the tip 12C. Specifically, in a case where the processor 16 performs the stirring operation of the liquid by the nozzle 12A, the processor 16 starts the suction mode in a single suction period SP from the start of the suction to the next discharge in a high-speed suction mode including a timing at which the suction speed is the maximum value in the suction period SP, and shifts the suction mode to a low-speed suction mode in which the suction speed is lower than the maximum value after the high-speed suction mode. The high-speed suction mode is a mode in which the suction speed is relatively high, and is an example of a "first mode" according to the technology of the present disclosure. The low-speed suction mode is a mode in which the suction speed is relatively low, and is an example of a "second mode" according to the technology of the present disclosure.

In the suction period SP shown in (A) of FIG. 6, a section in which the suction is performed in the high-speed suction mode is a section indicated by "H", and a section in which the suction is performed in the low-speed suction mode is a section indicated by "L". At the peak of the high-speed suction mode, the suction speed is the maximum value in the suction period SP, and the suction speed in the low-speed suction mode is lower than the maximum value in the high-speed suction mode.

In the suction period SP, the high-speed suction is performed in the first half, and the low-speed suction is performed in the second half. In the first half of the suction period SP, compared with the second half, the total amount of the liquid that has flowed into the tip 12C is small. The smaller the suction amount, the larger the spacing between the liquid surface in the tip 12C and the distal end 12D of the nozzle 12A. In this period, even in a case where the liquid is vigorously suctioned by the high-speed suction and the flow of the liquid in the tip 12C is increased, the liquid is less likely to splash up as shown in FIG. 5B. Then, the processor 16 shifts the suction mode from the high-speed suction mode to the low-speed suction mode in the second half of the suction period SP in which the total amount of the liquid that has flowed into the tip 12C is relatively large. As a result, even in a case where the distal end of the tip 12C is deviated from the center of the reaction cell R0 as shown in FIG. 5B and a pressure difference in the horizontal direction is generated, the flow of the liquid in the tip 12C is suppressed because the suction mode is the low-speed suction mode. As a result, by suppressing the splashing of the liquid, the liquid adhesion in which the liquid adheres to the nozzle 12A is suppressed, and the contamination is suppressed.

In the example shown in FIG. 6, each of the high-speed suction mode and the low-speed suction mode has a rising section in which the suction pressure rises and a falling section in which the suction pressure falls after reaching a peak. That is, in a case of shifting from the high-speed suction mode to the low-speed suction mode, the suction pressure passes through a timing of temporarily decreasing, and then increases again. In the example shown in FIG. 6, the suction pressure is decreased to "0" once in a case of shifting between the high-speed suction mode and the low-speed suction mode. As described above, in the example shown in FIG. 6, in the suction period SP, the peak of the suction pressure is present in each of the high-speed suction mode and the low-speed suction mode, and two peaks are present in the suction period SP. On the other hand, there is one peak in a discharge period.

The pressure control applied to the nozzle 12A is performed as follows, for example. As described above, the pump 12B is driven by a pulse motor. The rotation amount of the pulse motor is determined according to the number of input drive pulses, and the rotation speed is higher as the number of input pulses per unit time is larger. In a case where the pump 12B is driven by such a pulse motor, the pump 12B generates a higher pressure as the number of pulses per unit time is larger. As shown in (B) of FIG. 6 as an example, the number of pulses per unit time at the peak in the high-speed suction mode is about 9,000 pulses per second (pps), and the number of pulses per unit time at the peak in the low-speed suction mode is about 3,000 pps. In the present example, the high-speed suction mode generates a suction pressure about 3 times that of the low-speed suction mode, and the suction speed is also about 3 times that of the low-speed suction mode. In addition, the number of pulses per unit time at the peak of the discharge pressure is the same as that in the high-speed suction mode. Since the positive and negative of the pressure are reversed between the suction and the discharge, the number of pulses per unit time shown in (B) of FIG. 6 is also shown as negative for the suction.

As described above, the examination apparatus 10 according to the technology of the present disclosure includes the nozzle 12A in which the tip 12C that comes into contact with the liquid containing the specimen 22 and the reagent is replaceably mounted on the distal end 12D, and which performs the stirring operation of the liquid by repeating the suction and the discharge of the liquid in the container (for example, the reaction cell R0) in which the liquid is accommodated, and the processor 16 that controls the suction speed of the liquid via the control of the suction pressure of the nozzle 12A, in which, in a case of performing the stirring operation of the liquid, the processor 16 starts the suction mode in the single suction period SP from the start of the suction to the next discharge in the first mode (for example, the high-speed suction mode) including the timing at which the suction speed is the maximum value in the suction period, and then shifts the suction mode to the second mode (for example, the low-speed suction mode) in which the suction speed is lower than the maximum value after the first mode.

As a result, it is possible to suppress the contamination caused by the liquid suctioned into the tip adhering to the nozzle while suppressing the decrease in the stirring effect.

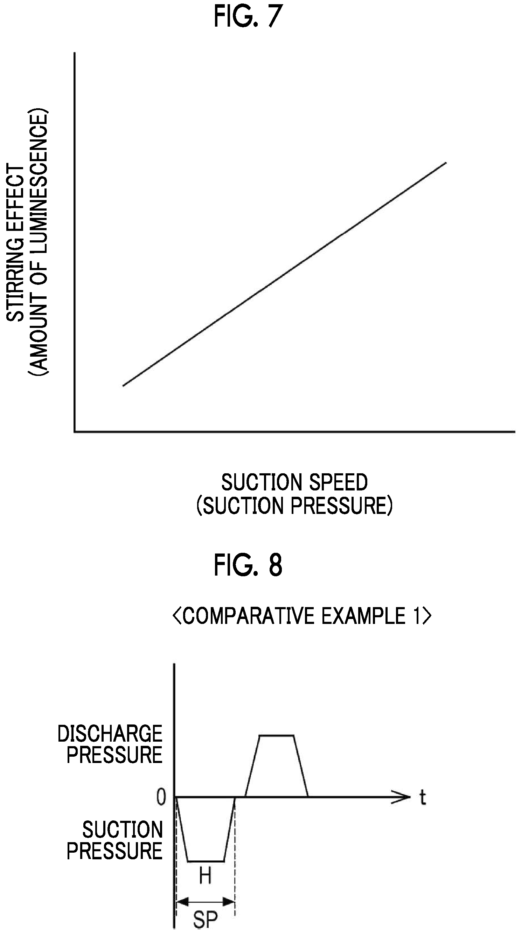

That is, as shown in FIG. 7, the higher the suction pressure during the stirring and the faster the suction speed, the better the stirring effect using the amount of chemiluminescence L as the indicator. As described above, in a case where the magnetic particles MB are dispersed in the liquid by the stirring, the surface area on which the first luminescent reagent 38 and the second luminescent reagent 39 act is increased. As a result, the stirring effect using the amount of luminescence as the indicator is obtained. In addition, since the dispersion of the magnetic particles MB proceeds as the suction speed is faster, the stirring effect is also improved as the suction speed is faster as shown in FIG. 7.

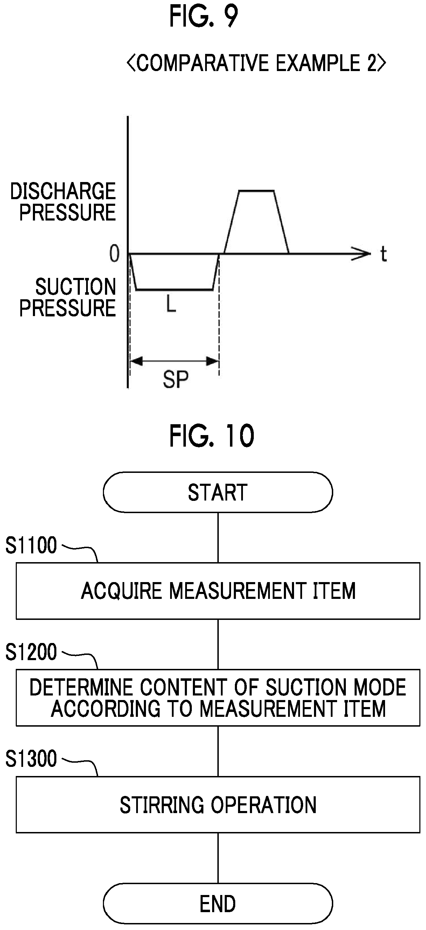

As in Comparative Example 1 shown in FIG. 8, in a case where the suction speed is increased over the entire period of the suction period SP, the stirring effect is improved, but the splashing of the liquid as shown in FIG. 5(B) is increased, and the contamination caused by the liquid adhesion to the nozzle 12A is likely to occur. On the other hand, as in Comparative Example 2 shown in FIG. 9, in a case where the suction speed is decreased over the entire period of the suction period SP, the splashing of the liquid as shown in FIG. 5B is suppressed, and thus the contamination can be suppressed. However, in this case, the stirring effect is decreased. Therefore, as shown in FIG. 6, the suction mode in a single suction period SP is started in the first mode including the timing at which the suction speed is the maximum value in the suction period, and then the suction mode is shifted to the second mode in which the suction speed is lower than the maximum value, so that it is possible to suppress the contamination caused by the liquid suctioned into the tip adhering to the nozzle while suppressing the decrease in the stirring effect.

In addition, in the above-described embodiment, in the examination apparatus 10, each of the first mode (for example, the high-speed suction mode) and the second mode (for example, the low-speed suction mode) has the rising section in which the suction pressure rises and the falling section in which the suction pressure falls after reaching the peak. According to this, in the first mode and the second mode, the control aspect for applying the suction pressure is the same, so that the control may be relatively simple. In a case where the mode is shifted from the first mode to the second mode, the suction pressure may be temporarily "0" as in the example shown in FIG. 6 or may not be "0". In short, in the present example, each of the first mode and the second mode has a peak, and it is sufficient that there is a valley therebetween, and the valley may be "0" or may be larger than "0".

In addition, in the above-described embodiment, the examination method of the specimen 22 is an examination method of optically detecting the target substance by using the antigen-antibody reaction between the target substance (for example, the examination target substance A) in the specimen 22 and the reagent, and the stirring operation is an operation of dispersing the reagent and the specimen 22 in the liquid. Since the dispersion state of the reagent and the specimen 22 in the liquid can be made uniform by the stirring operation, the unevenness in the amount of light is suppressed. In a case of the examination method accompanied by such a stirring operation, the technology of the present disclosure is particularly effective.

In addition, in the above-described embodiment, the reagent contains the antigen or the antibody bound to the magnetic particles MB. The magnetic particles MB may easily aggregate, and the necessity of stirring is high. In a case of the examination method in which the necessity of such a stirring operation is high, the technology of the present disclosure is particularly effective.

In the above-described embodiment, the pump 12B has been described as a syringe pump, but the pump 12B may be a pump other than a syringe pump, such as a tube pump. In addition, the motor that drives the pump 12B has been described as a pulse motor, but may be, for example, a direct current motor. In a case where the pressure control is performed by the direct current motor, the feedback control can be performed by detecting the amount of rotation with, for example, a rotary encoder.

### [Second embodiment]

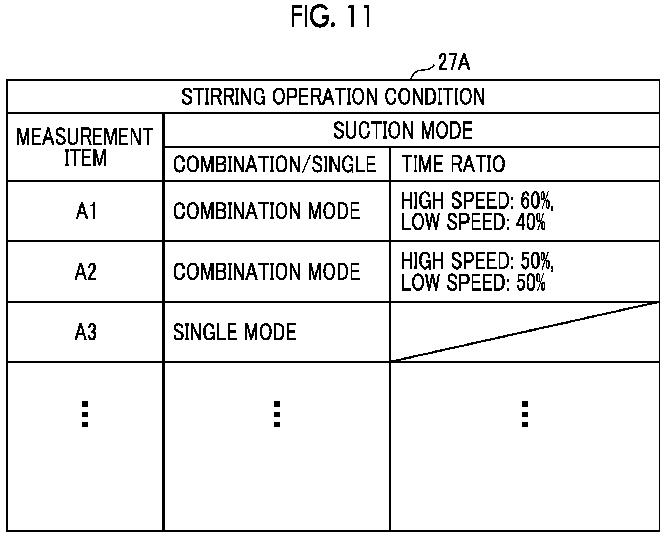

In a second embodiment shown in FIGS. 10 and 11, in a case where the examination of a plurality of measurement items using different reagents can be performed as in the examination apparatus 10 of the present disclosure, the processor 16 changes the content of the suction mode according to the measurement item. The measurement item is an example of an "item" according to the technology of the present disclosure. As a matter of course, the type of the specimen 22 may vary depending on the measurement item, such as in a blood examination or a urine examination.

The ease of occurrence of liquid adhesion to the nozzle 12A due to the splashing of the liquid as shown in FIG. 5B changes according to the physical properties of the liquid, such as the viscosity and the surface tension of the liquid. The physical properties of the liquid are determined by the type of the reagent contained in the liquid and the type of the specimen (for example, blood or urine). In addition, the ease of occurrence of liquid adhesion also changes depending on the amount of the liquid. The type of the specimen, the type of the reagent to be used, and the amount of the liquid containing the specimen and the reagent are determined according to the measurement item. Therefore, by changing the content of the suction mode according to the measurement item, it is possible to appropriately suppress the liquid adhesion.

As shown in FIG. 10, in the examination apparatus 10 of the second embodiment, the processor 16 first acquires the measurement item in step S1100. The measurement item is acquired, for example, by reading the information on the measurement item input by an operator or the identification information of the cartridge RC selected according to the measurement item input by the operator.

Then, in step S1200, the processor 16 determines the content of the suction mode according to the measurement item. Then, in step S1300, the stirring operation is performed in the determined suction mode.

FIG. 11 is an example of the stirring operation condition 27A of the second embodiment. In FIG. 11, the content of the suction mode is set for each measurement item such as "A1", "A2", and "A3". The content of the suction mode includes selection information of a combination mode and the single mode, and a time ratio of the high-speed suction mode and the low-speed suction mode. The combination mode is a mode in which two modes of the high-speed suction mode (an example of the first mode) and the low-speed suction mode (an example of the second mode) are switched in the suction period SP. The single mode is a mode in which, in the suction period SP, for example, a single mode of only the high-speed suction mode is executed in the entire period of the suction period SP.

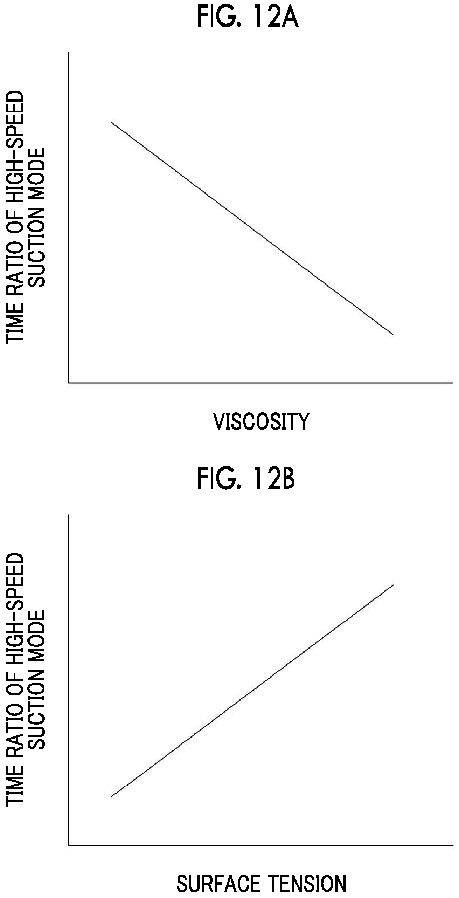

For example, it is found that the higher the viscosity, which is one of the characteristics of the reagent or the specimen 22 used for a certain measurement item, the more likely the liquid adhesion to the nozzle 12A occurs. Therefore, for example, in a case of the measurement item using the reagent having the viscosity higher than the preset threshold value, the time ratio of the high-speed suction mode is relatively reduced. In addition, in a case where the viscosity is equal to or lower than the threshold value, the time ratio of the high-speed suction mode is relatively increased because the liquid adhesion is less likely to occur. As a result, it is possible to appropriately suppress the contamination caused by the liquid adhesion according to the characteristics of the liquid containing the reagent or the specimen 22. That is, by determining the time ratio of the high-speed suction mode within a range in which the contamination can be suppressed according to the characteristics of the liquid, it is possible to minimize the decrease in the stirring effect. The method of determining the time ratio of the high-speed suction mode according to the viscosity is conceptually as shown in FIG. 12A, in which the lower the viscosity, the less the concern about the liquid adhesion, and thus the time ratio of the high-speed suction mode is increased.

In addition, regarding the selection of the combination mode, the higher the viscosity of the liquid, the more likely the liquid adhesion occurs. Therefore, for example, in a case of the measurement item using the reagent having a high viscosity, the combination mode as shown in FIG. 6 is selected instead of the single mode as shown in FIG. 8.

As the characteristics of the liquid, in addition to the viscosity, there is, for example, a surface tension. In a case of the surface tension, contrary to the viscosity, the smaller the surface tension, the more likely the liquid adhesion to the nozzle 12A occurs. Therefore, for example, in a case of the measurement item using the reagent having the surface tension smaller than the preset threshold value, the time ratio of the high-speed suction mode is relatively reduced. In addition, in a case of the measurement item in which the surface tension of the reagent to be used is equal to or higher than the threshold value, the time ratio of the high-speed suction mode is relatively increased because the liquid adhesion is less likely to occur. As a result, it is possible to appropriately suppress the contamination caused by the liquid adhesion according to the characteristics of the liquid. The method of determining the time ratio of the high-speed suction mode according to the surface tension is conceptually as shown in FIG. 12B, in which the larger the surface tension, the less the concern about the liquid adhesion, and thus the time ratio of the high-speed suction mode is increased.

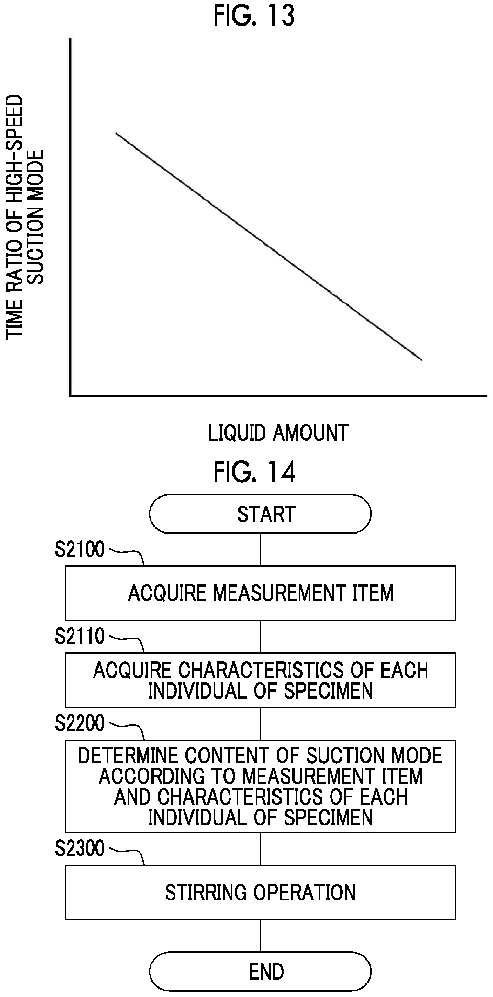

In addition, the amount of the reagent or the liquid also changes depending on the measurement item. The larger the amount of the liquid to be sucked by the tip 12C, the more likely the liquid adhesion to the nozzle 12A occurs. Therefore, as conceptually shown in FIG. 13, the time ratio of the high-speed suction mode is reduced for a measurement item in which the amount of the liquid to be sucked by the tip 12C is relatively large, and the time ratio of the high-speed suction mode is increased for a measurement item in which the amount of the liquid to be sucked by the tip 12C is relatively small.

As described above, in the second embodiment, the change in the content of the suction mode includes the change in the time ratio. As a result, it is possible to change the content of the suction mode with simple control. In addition, in the second embodiment, the change in the content of the suction mode includes the selection of any one of the combination mode or the single mode. The single mode may end in a shorter time than the combination mode. Therefore, by enabling the selection of the single mode as compared with a case where the combination mode is always executed, the throughput of the examination may be improved.

As the content of the suction mode, in addition to the time ratio, the suction pressure itself that defines the magnitude of the suction speed may be controlled. For example, in a case of the measurement item in which there is little concern about the liquid adhesion, the control of increasing the suction pressure is performed.

### [Modification Example of Second Embodiment]

In addition, as in the modification example shown in FIGS. 14 to 16, the processor 16 may change the content of the suction mode according to the individual difference of the specimen 22 in addition to the measurement item. The characteristics of the liquid that determine the ease of occurrence of liquid adhesion to the nozzle 12A also change depending on the individual difference of the specimen 22.

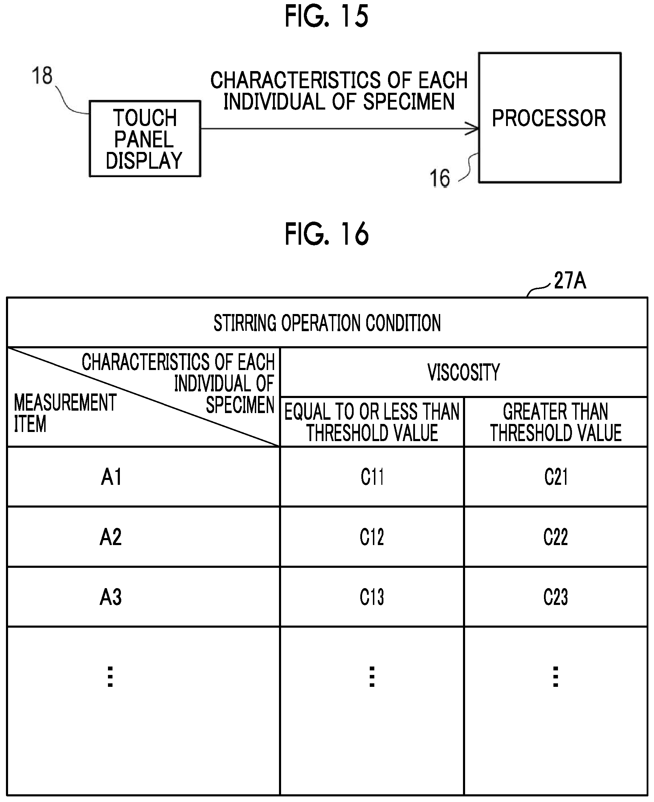

As shown in FIG. 14, the processor 16 first acquires the measurement item in step S2100. The method of acquiring the measurement item is the same as in step S1100 of FIG. 10. Next, in step S2110, the processor 16 acquires the characteristics of each individual of the specimen 22. The characteristics of each individual of the specimen 22 are input by the operator through the touch panel display 18, for example, as shown in FIG. 15. The operator measures the characteristics of each individual of the specimen 22 using, for example, a measurement device different from the examination apparatus 10. Then, the measured characteristic value is input through the touch panel display 18. Of course, a measurement mechanism that measures the characteristics of each individual of the specimen 22 may be built in the examination apparatus 10, and the processor 16 may acquire the characteristics of each individual of the specimen 22 from the built-in measurement mechanism.

Then, in step S2200, the processor 16 determines the content of the suction mode according to the measurement item and the characteristics of each individual of the specimen 22. In the case of the present example, the stirring operation condition 27A as shown in FIG. 16 is used. In the example shown in FIG. 16, in the stirring operation condition 27A, the content of the suction mode such as "C11", "C12", "C13", "C21", "C22", and "C23" is set according to a combination of the measurement item such as "A1", "A2", and "A3" and the viscosity which is one of the characteristics of each individual of the specimen. The content of each suction mode is set to, for example, content in which at least one of the selection information of the combination mode or the time ratio of the high-speed suction mode is different as shown in FIG. 11. "C11", "C12", and "C13" are the content of the suction mode corresponding to each of the measurement items "A1", "A2", and "A3" in a case where the viscosity is equal to or less than the threshold value. "C21", "C22", and "C23" are the combinations corresponding to each of the measurement items "A1", "A2", and "A3" in a case where the viscosity is greater than the threshold value. In a case where the content of the suction mode in a case where the viscosity is equal to or less than the threshold value and the content of the suction mode in a case where the viscosity is greater than the threshold value are compared for the same measurement item, for example, as in the relationship shown in FIG. 12A, the content of the suction mode in a case where the viscosity is equal to or less than the threshold value is set such that the time ratio of the high-speed suction mode is relatively large. In step S2300, the processor 16 executes the stirring operation in the determined content of the suction mode.

As described above, in the modification example of the second embodiment, the processor 16 changes the content of the suction mode according to the individual difference of the specimen 22 in addition to the measurement item (an example of the item). The viscosity and the surface tension of the liquid that determine the ease of occurrence of liquid adhesion also change according to the individual difference of the specimen. Therefore, by changing the content of the suction mode according to the characteristic representing the individual difference of the specimen 22, the liquid adhesion can be more appropriately suppressed.

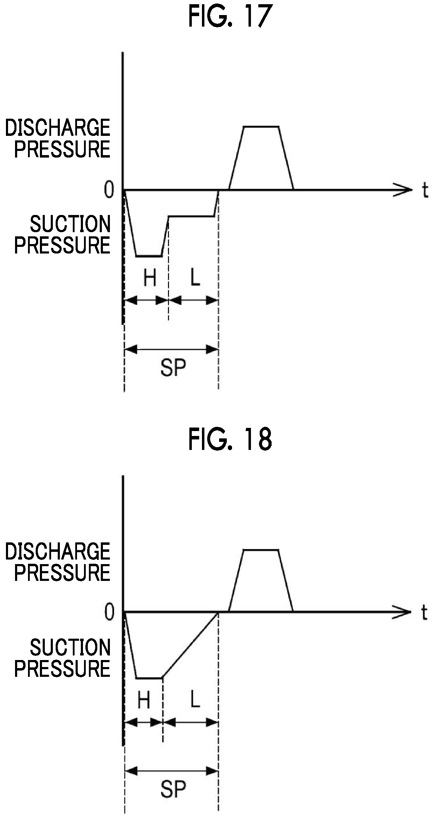

In addition, in each of the above-described embodiments, an example has been described in which each of the high-speed suction mode (an example of the first mode) and the low-speed suction mode (an example of the second mode) has a rising section of the suction pressure and a falling section after passing through a peak. However, as shown in FIGS. 17 and 18, in a case of shifting from the high-speed suction mode to the low-speed suction mode, the rising section in which the suction pressure rises at the initial stage of the low-speed suction mode may not be provided, and the suction pressure may be monotonically decreased in the low-speed suction mode. According to this, the liquid adhesion may be suppressed because the fluctuation of the suction pressure in a case of shifting to the low-speed suction mode is small.

The example shown in FIG. 17 is an example in which the suction pressure starts to decrease from the peak of the high-speed suction mode, so that the high-speed suction mode is shifted to the low-speed suction mode, and the suction pressure is decreased in a stepwise manner in the low-speed suction mode. Since the suction pressure is decreased in a stepwise manner in the low-speed suction mode, the low-speed suction mode may be effective depending on the type of the liquid. For example, by providing a constant section in which the suction pressure is constant in the low-speed suction mode, the effect of suppressing the liquid adhesion may be improved depending on the type of the liquid.

The example shown in FIG. 18 is an example in which the suction pressure starts to decrease from the peak of the high-speed suction mode, so that the high-speed suction mode is shifted to the low-speed suction mode, the suction pressure is continuously decreased in the low-speed suction mode, and the absolute value of the inclination of the falling section in which the suction pressure decreases in the low-speed suction mode is smaller than the absolute value of the inclination of the rising section in which the suction pressure rises at the initial stage of the high-speed suction mode. In the low-speed suction mode, the suction pressure is continuously decreased with a relatively gentle inclination, so that the effect of suppressing the liquid adhesion may be improved depending on the type of the liquid.

In the above-described embodiment, the examination apparatus 10 that adopts the examination method based on the basic principle of the chemiluminescence enzyme immunoassay has been described as an example, but the technology of the present disclosure may be applied to an examination apparatus that adopts another examination method. The technology of the present disclosure is effective for an examination apparatus that adopts an examination method in which it is necessary to stir a liquid containing a specimen and a reagent and it is necessary to suppress contamination caused by liquid adhesion to a nozzle.

In the above-described embodiment, the processor 16 can use various processors having various hardware structures described below.

Various processors include a CPU, a programmable logic device (PLD), a dedicated electrical circuit, and the like. As is well known, the CPU is a general-purpose processor that executes software (program) and functions as various processing units. The PLD is a processor such as a field programmable gate array (FPGA) that has a circuit configuration changeable after manufacture. The dedicated electric circuit is a processor such as an application specific integrated circuit (ASIC) that has a circuit configuration dedicatedly designed to perform specific processing.

One processing unit may be configured by using one of these various processors, or may be configured by a combination of two or more same type or different types of processors (for example, a plurality of FPGAs, or a combination of a CPU and an FPGA). Further, a plurality of processing units may be configured by one processor. As an example in which the plurality of processing units are constituted by one processor, first, one processor is constituted by a combination of one or more CPUs and software and this processor functions as the plurality of processing units. Second, as typified by a system on chip (SoC) or the like, a processor that realizes the functions of the entire system including the plurality of processing units by using one IC chip is used. Various processing units are composed of one or more of the various processors as the hardware structure, as described above.

More specifically, an electric circuit (circuitry) in which circuit elements such as semiconductor elements are combined can be used as the hardware structure of the various processors.

It is needless to say that the technology of the present disclosure is not limited to each of the embodiments described above, and various configurations can be adopted as long as the configuration does not deviate from the gist of the technology of the present disclosure. Further, the technology of the present disclosure extends to a computer-readable storage medium non-transitorily storing the program, in addition to the program.

The above-described contents and the above-shown contents are detailed descriptions for parts according to the technology of the present disclosure, and are merely examples of the technology of the present disclosure. For example, description related to the above configurations, functions, actions, and effects is description related to examples of configurations, functions, actions, and effects of the parts according to the technology of the present disclosure. Accordingly, in the contents described and the contents shown above, it is needless to say that removal of an unnecessary part, or addition or replacement of a new element may be employed within a range not departing from the gist of the technology of the present disclosure. In order to avoid complication and facilitate an understanding of the parts according to the technology of the present disclosure, in the contents described and the contents shown above, the description regarding common general technical knowledge which is not necessarily particularly described in terms of embodying the technology of the present disclosure is omitted.

The entire disclosure of Japanese Patent Application No. 2024-013009 filed on January 31, 2024 and the entire disclosure of Japanese Patent Application No. 2024-032137 filed on March 4, 2024 are incorporated into the present specification by reference.

All of the documents, the patent applications, and the technical standards described in the present specification are incorporated into the present specification by reference to the same extent as in a case where each of the documents, the patent applications, and the technical standards are specifically and individually stated to be incorporated by reference.

The following technology can be understood based on the above description.

### [Supplementary Note 1]

An examination apparatus that examines a specimen, the examination apparatus comprising:
a nozzle to which a tip that comes into contact with a liquid containing the specimen and a reagent is replaceably mounted at a distal end, and that is configured to perform a stirring operation of the liquid by repeating suction and discharge of the liquid in a container accommodating the liquid; and
a processor that is configured to control a suction speed of the liquid via control of a suction pressure of the nozzle, and, in a case of performing the stirring operation of the liquid, start a suction mode in a single suction period from start of the suction to next discharge in a first mode including a timing at which the suction speed reaches a maximum value in the suction period, and transition to a second mode in which the suction speed is lower than the maximum value after the first mode.

### [Supplementary Note 2]

The examination apparatus according to Supplementary Note 1,
in which the examination apparatus is configured to perform examinations of a plurality of items using different reagents, and
the processor is configured to change a content of the suction mode according to an item.

### [Supplementary Note 3]

The examination apparatus according to Supplementary Note 2,
in which the change in the content of the suction mode includes a change in a time ratio for executing each of the first mode and the second mode.

### [Supplementary Note 4]

The examination apparatus according to Supplementary Note 2 or 3,
in which the change in the content of the suction mode includes selection of a combination mode in which the first mode and the second mode are switched in the suction period, or a single mode in which a single mode is executed in the suction period.

### [Supplementary Note 5]

The examination apparatus according to any one of Supplementary Notes 2 to 4,
in which the processor is configured to change the content of the suction mode according to an individual difference of the specimen, in addition to the item.

### [Supplementary Note 6]

The examination apparatus according to Supplementary Note 5,
in which the change in the content of the suction mode includes a change in a time ratio for executing each of the first mode and the second mode.

### [Supplementary Note 7]

The examination apparatus according to Supplementary Note 5 or 6,
in which the change in the content of the suction mode includes selection of a combination mode in which the first mode and the second mode are switched in the suction period, or a single mode in which a single mode is executed in the suction period.

### [Supplementary Note 8]

The examination apparatus according to any one of Supplementary Notes 1 to 7,
in which each of the first mode and the second mode has a rising section in which the suction pressure rises and a falling section in which the suction pressure falls after reaching a peak.

### [Supplementary Note 9]

The examination apparatus according to any one of Supplementary Notes 1 to 7,
in which, in a case of transition from the first mode to the second mode, there is no rising section in which the suction pressure rises at an initial stage of the second mode, and the suction pressure monotonically decreases in the second mode.

### [Supplementary Note 10]

The examination apparatus according to Supplementary Note 9,
in which the transition to the second mode is made by starting a decrease in the suction pressure from a peak of the first mode, and the suction pressure decreases in a stepwise manner in the second mode.

### [Supplementary Note 11]

The examination apparatus according to Supplementary Note 9,
in which the transition to the second mode is made by starting a decrease in the suction pressure from a peak of the first mode, the suction pressure continuously decreases in the second mode, and an absolute value of a slope of a falling section in which the suction pressure decreases in the second mode is smaller than an absolute value of a slope of a rising section in which the suction pressure rises at an initial stage of the first mode.

### [Supplementary Note 12]

The examination apparatus according to any one of Supplementary Notes 1 to 11,
in which an examination method of the specimen is an examination method of optically detecting a target substance in the specimen by using an antigen-antibody reaction between the target substance and the reagent, and
the stirring operation is an operation of dispersing the reagent and the specimen in the liquid.

### [Supplementary Note 13]

The examination apparatus according to Supplementary Note 12,
in which the reagent contains an antigen or an antibody bound to a magnetic particle.

### [Supplementary Note 14]

An operation method of an examination apparatus including a nozzle to which a tip that comes into contact with a liquid containing a specimen and a reagent is replaceably mounted at a distal end, and that performs a stirring operation of the liquid by repeating suction and discharge of the liquid in a container accommodating the liquid, and a processor that controls a suction speed of the liquid through control of a suction pressure of the nozzle, the operation method comprising:
via the processor, in a case of performing the stirring operation of the liquid, starting a suction mode in a single suction period from start of the suction to next discharge in a first mode including a timing at which the suction speed reaches a maximum value in the suction period; and
transitioning to a second mode in which the suction speed is lower than the maximum value after the first mode.

### [Supplementary Note 15]

An operation program of an examination apparatus including a nozzle to which a tip that comes into contact with a liquid containing a specimen and a reagent is replaceably mounted at a distal end, and that performs a stirring operation of the liquid by repeating suction and discharge of the liquid in a container accommodating the liquid, and a processor that controls a suction speed of the liquid through control of a suction pressure of the nozzle, the operation program causing the processor to execute a process comprising:
in a case of performing the stirring operation of the liquid, starting a suction mode in a single suction period from start of suction to next discharge in a first mode including a timing at which the suction speed reaches a maximum value in the suction period, and transitioning to a second mode in which the suction speed is lower than the maximum value after the first mode.

## Claims

1. An examination apparatus that examines a specimen, the examination apparatus comprising:
a nozzle to which a tip that comes into contact with a liquid containing the specimen and a reagent is replaceably mounted at a distal end, and that is configured to perform a stirring operation of the liquid by repeating suction and discharge of the liquid in a container accommodating the liquid; and
a processor that is configured to control a suction speed of the liquid via control of a suction pressure of the nozzle, and, in a case of performing the stirring operation of the liquid, start a suction mode in a single suction period from start of the suction to next discharge in a first mode including a timing at which the suction speed reaches a maximum value in the suction period, and transition to a second mode in which the suction speed is lower than the maximum value after the first mode.

2. The examination apparatus according to claim 1,
wherein the examination apparatus is configured to perform examinations of a plurality of items using different reagents, and
the processor is configured to change a content of the suction mode according to an item.

3. The examination apparatus according to claim 2,
wherein the change in the content of the suction mode includes a change in a time ratio for executing each of the first mode and the second mode.

4. The examination apparatus according to claim 2,
wherein the change in the content of the suction mode includes selection of a combination mode in which the first mode and the second mode are switched in the suction period, or a single mode in which a single mode is executed in the suction period.

5. The examination apparatus according to claim 2,
wherein the processor is configured to change the content of the suction mode according to an individual difference of the specimen, in addition to the item.

6. The examination apparatus according to claim 5,
wherein the change in the content of the suction mode includes a change in a time ratio for executing each of the first mode and the second mode.

7. The examination apparatus according to claim 5,
wherein the change in the content of the suction mode includes selection of a combination mode in which the first mode and the second mode are switched in the suction period, or a single mode in which a single mode is executed in the suction period.

8. The examination apparatus according to claim 1,
wherein each of the first mode and the second mode has a rising section in which the suction pressure rises and a falling section in which the suction pressure falls after reaching a peak.

9. The examination apparatus according to claim 1,
wherein, in a case of transition from the first mode to the second mode, there is no rising section in which the suction pressure rises at an initial stage of the second mode, and the suction pressure monotonically decreases in the second mode.

10. The examination apparatus according to claim 9,
wherein the transition to the second mode is made by starting a decrease in the suction pressure from a peak of the first mode, and the suction pressure decreases in a stepwise manner in the second mode.

11. The examination apparatus according to claim 9,
wherein the transition to the second mode is made by starting a decrease in the suction pressure from a peak of the first mode, the suction pressure continuously decreases in the second mode, and an absolute value of a slope of a falling section in which the suction pressure decreases in the second mode is smaller than an absolute value of a slope of a rising section in which the suction pressure rises at an initial stage of the first mode.

12. The examination apparatus according to claim 1,
wherein an examination method of the specimen is an examination method of optically detecting a target substance in the specimen by using an antigen-antibody reaction between the target substance and the reagent, and
the stirring operation is an operation of dispersing the reagent and the specimen in the liquid.

13. The examination apparatus according to claim 12,
wherein the reagent contains an antigen or an antibody bound to a magnetic particle.
